# EUROPÄISCHE PATENTANMELDUNG

(11) **EP 0 978 310 A2**
(43) Veröffentlichungstag der Anmeldung: **09.02.2000**
(21) Anmeldenummer: 99115074.9
(22) Anmeldetag: 05.08.1999
(51) Int. Cl.: B01J 3/00, B01J 19/18

(54) **Verfahren zum Dosieren eines flüssigen, gasförmigen oder in überkritischem Zustand vorliegenden Mediums in einen Druckreaktor**

(30) Priorität: 07.08.1998 DE 19835914
(71) Anmelder: BASF AKTIENGESELLSCHAFT, 67056 Ludwigshafen (DE)
(72) Erfinder: Hildebrandt, Volker, Dr., 68169 Mannheim (DE); Breede, Knut, 22391 Hamburg (DE); Hlawitschka, Werner, 67459 Böhl-Iggelheim (DE)
(74) Vertreter: Isenbruck, Günter, Dr.

(57) **Zusammenfassung**

Die Erfindung betrifft ein Verfahren zum Dosieren eines gasförmigen oder in überkritischem Zustand vorliegenden Mediums in einen Druckreaktor (1). Dieser Druckreaktor (1) weist einen Reaktionsraum (13) auf, der mit einem Rührerdom (5) verbunden ist, in den das Medium mit einem vorherbestimmten Volumen- oder Massestrom so dosiert wird, daß der Druck im Rührerdom (5) größer wird als der Druck im Reaktionsraum (13). Dadurch wird verhindert, daß reaktionsfähige Gemische aus dem Reaktionsraum (13) in den Rührerdom (5) diffundieren.

Die Erfindung betrifft auch Verwendungen des Verfahrens. So kann es zum Spülen des Druckreaktors (1), zum Schutz des Rührantriebs (3), zur Kühlung oder Erwärmung des Inhalts des Reaktionsraumes (13), zur Regulierung der Reaktionsgeschwindigkeit, zur Dosierung eines Reaktionsteilnehmers in den Reaktionsraum (13) und zum gezielten Füllen oder Entspannen des Druckreaktors (1) verwendet werden.

Die Erfindung betrifft auch eine Vorrichtung zum Dosieren eines gasförmigen oder in überkritischem Zustand vorliegenden Mediums.

## Beschreibung

Die Erfindung betrifft ein Verfahren zum Dosieren eines gasförmigen oder in überkritischem Zustand vorliegenden Mediums in einen Druckreaktor, erfindungsgemäße Verwendungen des Verfahrens sowie eine Vorrichtung zum Durchführen dieses Verfahrens.

Ausgangspunkt für die vorliegende Erfindung waren Reaktionen in überkritischen Medien. Diese gewinnen zunehmend an Bedeutung. Dazu gehören chemische Umsetzungen, aber auch Polymerisationen in überkritischen Medien, wie beispielsweise überkritisches Kohlendioxid, überkritisches Propan oder überkritisches Wasser

Der überkritische Zustand ist für die meisten in Frage kommenden Stoffe durch einen relativ hohen Druck gekennzeichnet und die Stoffe liegen hinsichtlich der Tatsache, daß kein Flüssigkeitsspiegel vorhanden ist, in einer dem gasförmigen Aggregatzustand vergleichbaren Form vor. Dies hat zur Folge, daß das gesamte gaszugängliche Volumen des Reaktionsapparates durch die überkritische Phase ausgefüllt wird. Daher gelangt das Reaktionsgemisch auch in alle Hohlräume, die mit dem eigentlichen Reaktionsgefäß verbunden sind.

Es ist bei verschiedenen Reaktionen, in denen kondensierbare oder feste Stoffe gehandhabt werden, eine Verunreinigung solcher Hohlräume beobachtet worden. Ein besonderes Problem ergibt sich z.B. bei magnetgekuppelten Rührantrieben, in denen es im Spalttopf zu Ablagerungen und schließlich zum Ausfall des Rührers kommen kann.

Eine hermetische Abdichtung zwischen Rührerdom und Reaktionsraum ist technisch nicht möglich, da ein Druckausgleich möglich sein muß. Dies bedeutet, daß auch bei einer relativ dicht anliegenden Diffüsionssperre, zum Beispiel in Form eines Gleitlagers, durch Diffusion oder bei geringen Druckwechseln im Reaktionsraum zwangsläufig Reaktionsgemisch in die abgedichteten Hohlräume gelangt.

Daher war es Aufgabe der vorliegenden Erfindung, ein Verfahren zu entwickeln, das einen Druckreaktor, insbesondere den Rührantrieb eines solchen Druckreaktors, bei Reaktionen mit gasförmigen, insbesondere in überkritischem Zustand vorliegenden Medien vor durch Verunreinigungen bedingte Ausfälle schützt und eine Vorrichtung bereitzustellen, mit welcher das Verfahren durchgeführt werden kann.

Gelöst wird diese Aufgabe durch ein Verfahren zum Dosieren eines gasförmigen oder in überkritischem Zustand vorliegenden Mediums in einen Druckreaktor, wobei der Druckreaktor einen Reaktionsraum aufweist, der über eine Zuleitung mit einem Rührerdom verbunden ist, in den ein vorherbestimmter Volumen- oder Massestrom des Mediums in der Weise dosiert wird, daß der Druck im Rührerdom größer wird als der Druck im Reaktionsraum.

Im wesentlichen kommt es darauf an, daß sich in dem an den Reaktionsraum anschließenden und üblicherweise mit diesem über eine Dichtungseinheit verbundenen Bereich durch das Dosieren des Mediums allmählich ein gegenüber dem Reaktionsraum erhöhter Druck ausbildet. Durch das Fließen des dosierten Mediums von dem Rührerdom in den Reaktionsraum und den sich zusätzlich aufbauenden höheren Druck wird der Diffusion reaktionsfähiger Gemische aus dem Reaktionsraum und damit der Bildung oder dem Eindringen von Reaktionsprodukten, wie beispielsweise Pulvern, in den Hohlraum oder sonstigen Totvolumina des Druckreaktors entgegengewirkt.

Durch die DE-AS-1 045 989 ist zwar ein Verfahren bekannt, das in Druckgefäßen durchgeführt wird und bei dem ebenfalls während der Durchführung einer chemischen Reaktion ein Entweichen von Stoffen aus dem Reaktionsraum durch Dosieren eines vorbestimmten Volumen- oder Massestroms in den Reaktionsraum mit höherem Druck als dem, der im Reaktionsraum herrscht, verhindert wird.

Bei diesem Verfahren handelt es sich jedoch speziell um Reaktionen mit stark korrodierenden Lösungen bei erhöhter Temperatur. Diese Reaktionen werden in einem Reaktionsraum in Form eines gegen chemische Angriffe beständigen Einsatzgefässes durchgeführt, das in dem Druckgefäß, z.B. einem Autoklav, mit Spielraum angeordnet ist. Dieser Spielraum definiert einen Hohlraum. Um zu vermeiden, daß bei diesen unter erhöhter Temperatur durchgeführten Reaktionen z.B. Salzsäuredampf durch eine notwendigerweise im Einsatzgefäß vorhandene kleine Öffnung herausqualmt und dann im heißen Zustand an die Eisenwand des Autoklavs kommt, wodurch dieser korrodieren würde, wird ein gasförmiges Medium in Form eines Inertgases mit einem solchen Volumenstrom in den Hohlraum des Autoklaven dosiert, daß an der Meinen Öffnung des Einsatzgefäßes eine schwache Einwärtsbewegung des Inertgases stattfindet, so daß kein HCl nach außen dringen kann.

Eine solche einfache Anordnung ist jedoch nicht geeignet, bei den hier durchgeführten Reaktionen mit gasförmigen, insbesondere in überkritischem Zustand vorliegenden Medien einen Ausfall des Rührers durch Schutz des mit dem Reaktionsraum durch eine Zuleitung verbundenen Rührerdoms zu bewirken.

Gemäß einer Ausführungsform des erfindungsgemäßen Verfahrens kann die Dosierung des Volumen- oder Massestroms bei einer Druckerhöhung im Reaktionsraum über eine Regeleinheit nachgeregelt werden. Dadurch kann auch dann das Eindringen von Reaktionsteilnehmern aus dem Reaktor in den Hohlraum verhindert werden, wenn es zu reaktionsbedingten oder apparativ bedingten Druckschwankungen kommt.

Gemäß einer bevorzugten Ausführungsform wird die Zuleitung des Rührerdoms in Form einer Verbindung zum Reaktionsraum durch ein gasdurchlässiges Lager gebildet Gemäß einer weiteren Ausführungsform kann der Volumen- oder Massestrom des Mediums eine Temperatur aufweisen, die relativ zu der Temperatur im Reaktionsraum höher oder niedriger ist. Es kann nur ein Medium oder ein Gemisch von Medien dosiert werden. Außerdem kann das dem Reaktor entnommene Medium recycelt und dem Druckreaktor erneut zugeführt werden. Das recycelte Medium kann beispielsweise über eine am Druckreaktor vorgesehene Entspannungsleitung entnommen werden.

Die Erfindung betrifft auch besondere Verwendungen des vorgenannten Verfahrens.

So kann das Verfahren zum Spülen des Druckreaktors verwendet werden. In diesem Fall dient das Dosieren eines flüssigen, vorzugsweise gasförmigen und besonders bevorzugt in überkritischem Zustand vorliegenden Mediums dem Schutz des Rührantriebs des verwendeten Druckreaktors. Gleichzeitig kann mit dem Spülen auch erreicht werden, daß für die im Druckreaktor stattfindende Reaktion unerwünschte Gas- oder Restgasanteile entfernt werden. Auf diesem Weg wird eine Inertisierung des Druckreaktors erreicht. Dieses Spülen kann auch auf die Entspannungsleitung des Druckreaktors über einen sich in dieser aufbauenden höheren Druck ausgedehnt werden.

Besonders vorteilhaft ist, daß sich durch das erfindungsgemäße Verfahren mit dem Schutz der im Druckraum des Reaktors sich befindenden technischen Teile weitere, für die unterschiedlichsten Reaktionsführungen vorteilhafte Verwendungen verbinden lassen. Insbesondere ist das Verfahren für die Verwendung bei Reaktionen in überkritischen Medien geeignet.

Außerdem kann das Verfahren gleichzeitig zur Kühlung oder Erwärmung des Inhalts des Reaktionsraumes verwendet werden. Dazu wird ein im Vergleich zum Reaktor unterschiedlich warmes Dosier- beziehungsweise Spülmedium in den Reaktor eingeleitet. Wenn das Dosier- beziehungsweise Spülmedium eine Temperatur aufweist, die relativ zu der Temperatur im Reaktionsraum niedriger liegt, so dient der eingeleitete Volumen- oder Massestrom des Mediums gleichzeitig der Kühlung und damit der Funktionssicherung technischer Teile des Druckreaktors. Eine solche Sicherung der Funktion technischer Teile betrifft beispielsweise die notwendige Kühlung der Magnete eines Magnetantriebs.

Gleichzeitig kann das erfindungsgemäße Verfahren zur Regulierung und Einstellung einer gewünschten konstanten Reaktionsgeschwindigkeit dienen, die die Raum-Zeit-Ausbeute des Druckreaktors positiv beeinflußt. Dies gilt besonders, wenn das zugeführte Medium Reaktionsteilnehmer ist.

Entsprechend kann im Verlauf einer chemischen Reaktion gezielt ein Reaktionsteilnehmer in den Reaktionsraum dosiert werden, um damit Einfluß auf die Reaktion zu nehmen. Die chemische Reaktion kann beispielsweise eine Hydrierungsreaktion sein Dann wird als ein Reaktionsteilnehmer Wasserstoff dosiert. Besonders vorteilhaft ist dann, daß die dosierte Wasserstoffzugabe zum einen für die Reaktion selbst benötigt wird und zum anderen aber auch der Spülung von Bestandteilen des Druckreaktors dient. Davon können sowohl der Reaktionsraum als auch der Hohlraum, Zuleitungen und die Entspannungsleitung umfaßt sein.

Aus Gründen der Wirtschaftlichkeit oder sonstigen Erwägungen kann neben dem als Reaktionsteilnehmer benötigten Gas oder Medium zusätzlich ein anderes Medium, beispielsweise CO₂ zudosiert werden und den teuereren Reaktionsteilnehmer teilweise ersetzen.

Es ist auch eine Verwendung des erfindungsgemäßen Verfahrens zum gezielten Befüllen oder Entspannen des Reaktors möglich. Dadurch wird es beispielsweise möglich, auch eine vorhandene Entspannungsleitung durch den Volumen- oder Massestrom von reaktionsbedingten Verunreinigungen freizuhalten. Eine solche Entspannungsleitung weist regelmäßig ein Ventil auf. Durch Schließen des Ventils und anschließendes gezieltes Entspannen kann auch die Entspannungleitung vor dem Verstopfen durch Absetzen von Verunreinigungen geschützt werden.

Eine Herausforderung bei der Durchführung des erfindungsgemäßen Verfahrens liegt in der Beherrschung der hohen Drücke und dem überkritischen Zustand des Reaktionsgemisches. Daher war eine besondere Vorrichtung erforderlich, um das erfindungsgemäße Verfahren durchführen zu können. Diese Vorrichtung besteht aus der Kombination einer geeigneten Zuleitung, eines Regelventils, eines Massedurchflußgerätes, eines Druckpuffers zur Bereitstellung des Dosier- beziehungsweise Spülmediums sowie gegebenenfalls einer elektronischen Regeleinheit. Wenn der Druckreaktor einen Rührerdom aufweist, ist die Zuleitung ein gasdurchlässiges Lager.

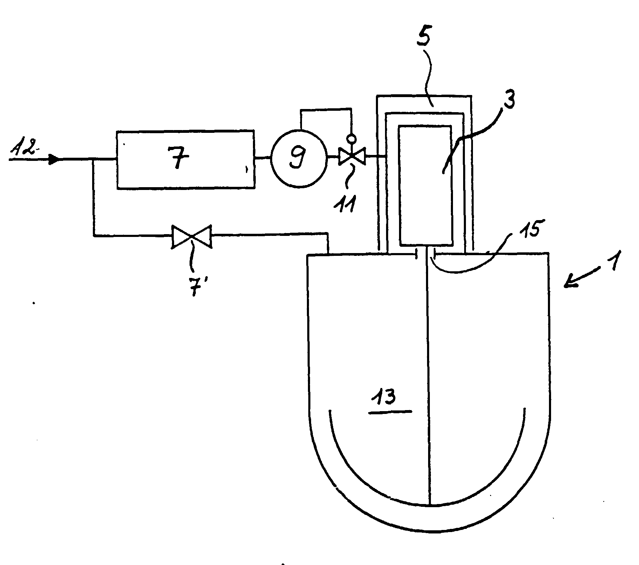

Im folgenden soll die Erfindung anhand eines in der beigefügten Zeichnung dargestellten Ausführungsbeispieles und den damit durchgeführten Versuchen näher erläutert werden.

Dabei zeigt die einige Figur eine schematische Darstellung der zur Durchführung des erfindungsgemäßen Verfahrens verwendeten Vorrichtung für eine Polymerisationsreaktion in überkritischem Medium.

Die in der einigen Figur dargestellte Vorrichtung weist einen insgesamt mit 1 bezeichneten Druckreaktor auf, der mit einer nicht im einzelnen dargestellten Heizung, einer Entspannungsleitung, einer Mantelkühlung und einer Rühreinrichtung, die einen Magnetantrieb 3 aufweist, der im Rührerdom 5 angeordnet ist, ausgestattet ist. In diesem Druckreaktor werden chemische Reaktionen, beispielsweise Polymerisationen in überkritischem Kohlendioxid, durchgeführt. Die Reaktanden, die in diesem Fall aus dem eingesetzten Monomer und dem Initiator für die Polymerisationsreaktion bestehen, sind in der überkritischen Phase löslich und bilden daher zu Reaktionsbeginn nur eine Phase. Während der Reaktion fällt das gebildete Polymer als zweite feste Phase aus. Um das diffuse Eindringen des Reaktionsgemisches in den den Magnetantrieb aufweisenden Rührerdom 5 zu verhindern, und folglich die Bildung festen Polymers innerhalb des Rührerdoms 5 zu unterbinden, wurde die erfindungsgemäße Vorrichtung installiert. Diese besteht aus einem unter Druck stehenden Gasvorratsgefäß 7, das eine direkte Verbindung zu einem Gasdurchflußmesser 9 aufweist. Dessen Ausgang führt über ein Regelventil 11 zu dem Rührerdom 5, in den das Medium eingeleitet wird. Über Leitung 12 wird CO₂ zu dem Gasvorratsgefäß 7 und über eine Leitungsabzweigung zu einem Ventil 7' geführt. Das durch die Leitungsabzweigung fließende CO₂ wird bei geöffnetem Ventil 7' gewünschtenfalls direkt in einen Reaktionsraum 13 geleitet.

Der Gasdurchflußmesser 9 ermittelt den aktuellen Gasdurchfluß. Mit dieser Angabe wird das Ventil 11 derart angesteuert, daß der Gasdurchfluß unabhängig vom Gegendruck des Reaktors einen konstanten Wert aufweist. Der sich im Rührerdom 5 durch das einströmende Medium aufbauende leichte Überdruck führt dazu, daß das Spülmedium durch das untere Rührerwellenlager, beziehungsweise das als Dichtungseinheit fungierende gasdurchlässige Lager 15, in den Reaktionsraum 13 strömt und damit das Eindringen von Substanzpartikeln und/oder reaktionsfähigen Gemischen aus dem Reaktionsraum 13 in den Rührerdom 5 verhindert. Zusätzlich wird verhindert, daß Pulver, welches bereits im Reaktionsraum 13 vorliegt, in das Rührerwellenlager oder das gasdurchlässige Lager 15 gelangt.

Die folgende Tabelle gibt beispielhaft Druckerhöhungen im Reaktionsraum in Abhängigkeit vom CO₂-Volumenstrom an, berechnet nach der Zustandsgleichung von Bender.

**Tabelle 1**

| Angaben für CO₂ | Dosierstrom = 100 Nml/h | Dosierstrom = 600 Nml/h |
|---|---|---|
| Druckanstieg (_p) im 1 L-Reaktor bei 100 bar/60°C in 3h | 0,08 bar | 0,5 bar |
| Druckanstieg (_p) im 1 L-Reaktor bei 200 bar/60°C in 3h | 0,3 bar | 2,0 bar |
| Volumenstrom bei einem konstanten Reaktordruck von 100 bar bei 60°C | 0,610 ml/h | 3,663 ml/h |
| Volumenstrom bei einem konstanten Reaktordruck von 200 bar bei 60°C | 0,246 ml/h | 1,477 ml/h |

### Beipiel 1: Polymerisation mit Rührerspülung

In dem zuvor beschriebenen Druckreaktor mit erfindungsgemäßer Dosierung eines Kohlendioxid-Volumenstroms wurde die nachfolgend beschriebene Polymerisationsreaktion durchgeführt:

Zur Polymerisation wurden etwa 1800 g Kohlendioxid, 150 g Acrylsäure sowie 2 g des Initiators Azo-diisobutyronitril (AIBN) in den Reaktor gegeben. Die Polymerisation wurde bei 80°C durchgeführt, der sich einstellende Druck betrug etwa 160 bar. Zur Homogenisierung des Reaktionsgemisches wurde mit 250 Umdrehungen/Minute gerührt. Als Rührorgan wurde ein Ankerrührer eingesetzt. Während der Reaktion fiel das gebildete Polymer als Pulver an. Die Reaktionszeit betrug etwa 90 Minuten.

Zur Spülung der Rührerwelle wurde ein Kohlendioxid-Volumenstrom von 300 Nml/h eingestellt. Ein Druckanstieg im Reaktor konnte am Manometer nicht beobachtet werden, betrug jedoch rechnerisch 1 bar. Es konnten bei dieser Polymerisation auch nach mehr als 30 Versuchen an der Rührerwelle keine Beläge innerhalb des Rührerdoms oder sonstige Beeinträchtigungen der Rührerfunktion beobachtet werden.

### Vergleichsbeispiel 1: Polymerisation ohne Rührerspülung

Die in Beispiel 1 beschriebene Polymerisationsreaktion wurde wieder in einem Druckbehälter ausgeführt, der nur mit einem magnetgekuppelten Ankerrührer sowie einem Heiz-/Kühlmantel zur Temperierung des Reaktionsgemisches ausgestattet. Zur Polymerisation wurden etwa 1800 g Kohlendoxid, 150 g Acrylsäure sowie 2 g AIBN in den Reaktor gegeben. Die Polymerisation wurde bei 80°C durchgeführt, der sich einstellende Druck betrug etwa 150 bar. Zur Homogenisierung des Reaktions-gemisches wurde mit 250 Umdrehungen/Minute gerührt. Während der Reaktion fiel das gebildete Polymer als Pulver an Die Reaktionszeit betrug etwa 90 Minuten.

Bei dieser Polymerisationsreaktion wurden an der Rührerwelle im unteren Bereich des Rührerdoms starke Beläge, bestehend aus Polymerpulver beobachtet. Diese verhärteten und führten nach etwa 10 Versuchen zu Störungen oder sogar zum Ausfall des Rührers. Genauere Untersuchungen zeigten, daß Polymer auch in den oberen Teil des Rührerdoms vordrang und dort je nach Reaktionsbedingungen zu Belägen führte.

### Beispiel 2: Hydrierungsreaktionen mit Rührerspülung

Es wurden Hydrierungsreaktionen in dem Druckbehälter gemäß Beispiel 1 mit der erfindungsgemäßen technischen Ausrüstung zur Rührerspülung ausgeführt. Auch hier wurde als Rührorgan ein Ankerrührer eingesetzt.

Zur Reaktion wurden etwa 2500 g Kohlendioxid, 460 g Citral sowie 2,25 g eines Palladiumkatalysators vom Typ HO/50 in den Reaktor gegeben. Die Reaktion wurde bei 70°C durchgeführt, der sich einstellende Druck betrug etwa 200 bar. Es wurden dann 10 bar Wasserstoff aufgepreßt, um den zur Hydrierung notwendigen Wasserstoff zur Verfügung zu stellen. Während der Reaktion fiel durch den Verbrauch von Wasserstoff der Druck im Behälter Die Reaktionszeit betrug 12 Stunden.

Zur Spülung der Rührerwelle wurde ein Kohlendioxid-Volumenstrom von 300 Nml/h eingestellt. Der Druckanstieg im Reaktor durch die Kohlendioxidzufuhr betrug nominal 1 bar, tatsächlich fiel der Druck durch den Wasserstoffverbrauch jedoch geringfügig.

Bei diesen Reaktionen wurden keine Reaktanden oder Produkte im Rührerdom gefunden, welche bei Produktwechseln zu Verunreinigungen der nächsten Charge führen können.

## Patentansprüche

1. Verfahren zum Dosieren eines gasförmigen oder in überkritischem Zustand vorliegenden Mediums in einen Druckreaktor (1), wobei der Druckreaktor (1) einen Reaktionsraum (13) aufweist, der über eine Zuleitung mit einem Rührerdom (5) verbunden ist, in den ein vorherbestimmter Volumen- oder Massestrom des Mediums in der Weise dosiert wird, daß der Druck im Rührerdom (5) größer wird als der Druck im Reaktionsraum (13).

2. Verfahren nach Anspruch 1, dadurch gekennzeichnet, daß die Dosierung des Volumen- oder Massestroms bei einer Druckerhöhung im Reaktionsraum (13) über eine Regeleinheit nachgeregelt wird.

3. Verfahren nach Anspruch 1 oder 2, dadurch gekennzeichnet, daß die Zuleitung durch ein gasdurchlässiges Lager (15) gebildet wird.

4. Verfahren nach einem der Ansprüche 1 bis 3, dadurch gekennzeichnet, daß der Volumen- oder Massestrom des Mediums eine Temperatur aufweist, die relativ zu der Temperatur im Reaktionsraum (13) höher oder niedriger ist.

5. Verfahren nach einem der Ansprüche 1 bis 4, dadurch gekennzeichnet, daß nur ein Medium oder ein Gemisch von Medien dosiert wird.

6. Verfahren nach einem der Ansprüche 1 bis 5, dadurch gekennzeichnet, daß das dem Reaktor (1) entnommene Medium recycelt und dem Druckreaktor (1) wieder zugeführt wird.

7. Verwendung des Verfahrens gemäß einem der Ansprüche 1 bis 6 zum Spülen des Druckreaktors (1).

8. Verwendung nach Anspruch 7 zum Schutz des Rührantriebs.

9. Verwendung nach Anspruch 7 oder 8 bei Reaktionen in überkritischen Medien.

10. Verwendung des Verfahrens gemäß einem der Ansprüche 4 bis 6 zur Kühlung oder Erwärmung des Inhalts des Reaktionsraumes (13).

11. Verwendung des Verfahrens gemäß einem der Ansprüche 4 bis 6, bei der der Volumen- oder Massestrom des Mediums eine Temperatur aufweist, die relativ zu der Temperatur im Reaktionsraum (13) niedriger liegt, zur Kühlung technischer Teile des Druckreaktors (1).

12. Verwendung des Verfahrens gemäß einem der Ansprüche 4 bis 6 zur Regulierung der Reaktionsgeschwindigkeit.

13. Verwendung des Verfahrens gemäß einem der Ansprüche 1 bis 6 bei einer chemischen Reaktion zur Dosierung eines Reaktionsteilnehmers in den Reaktionsraum (13).

14. Verwendung nach Anspruch 12 oder 13, bei der als chemische Reaktion eine Hydrierungsreaktion durchgeführt und als ein Reaktionsteilnehmer Wasserstoff dosiert wird.

15. Verwendung des Verfahrens gemäß einem der Ansprüche 1 bis 6 zum gezielten Befüllen oder Entspannen des Druckreaktors (1).

16. Vorrichtung zum Dosieren eines gasförmigen oder im überkritischen Zustand vorliegenden Mediums mit einem vorherbestimmten Volumen- oder Massestrom unabhängig vom Gegendruck in einen Druckreaktor (1), der einen Reaktionsraum (13) aufweist, der über eine Zuleitung mit einem Rührerdom (5) verbunden ist, wobei die Vorrichtung ein Regelventil (11), ein Massedurchflußgerät (9), einen Druckpuffer und gegebenenfalls eine elektronische Regeleinheit aufweist.
